(19) Europäisches Patentamt
European Patent Office
Office européen des brevets

(11) Veröffentlichungsnummer : **0 059 468**
**B1**

(12) # EUROPÄISCHE PATENTSCHRIFT

(45) Veröffentlichungstag der Patentschrift : **15.08.84**

(51) Int. Cl.³ : **C 09 D 5/40**, C 25 D 13/06

(21) Anmeldenummer : **82101580.7**

(22) Anmeldetag : **02.03.82**

(54) **Beschichtungsbad für das kataphoretische Beschichten von Oberflächen elektrisch leitfähiger Substrate.**

(30) Priorität : **04.03.81 DE 3108072**

(43) Veröffentlichungstag der Anmeldung : **08.09.82 Patentblatt 82/36**

(45) Bekanntmachung des Hinweises auf die Patenterteilung : **15.08.84 Patentblatt 84/33**

(84) Benannte Vertragsstaaten : **AT BE CH DE FR GB IT LI NL SE**

(56) Entgegenhaltungen : **DE-A- 1 646 037**

(73) Patentinhaber : **BASF Farben + Fasern Aktiengesellschaft**
**Am Neumarkt 30**
**D-2000 Hamburg 70 (DE)**

(72) Erfinder : **Arlt, Klaus, Dipl.-Chem.Dr.**
**Anton-Aulke-Ring 9**
**D-4403 Senden (DE)**
Erfinder : **Strauss, Udo, Dipl.-Chem.Dr.**
**Wüllnerstrasse 16**
**D-4400 Münster (DE)**
Erfinder : **Streitberger, Hans-Joachim, Dipl.-Chem.Dr.**
**Melchersstrasse 43**
**D-4400 Münster (DE)**

(74) Vertreter : **Habbel, Hans-Georg, Dipl.-Ing.**
**Postfach 3429 Am Kanonengraben 11**
**D-4400 Münster (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 059 468 B1

**Beschreibung**

Die Erfindung betrifft ein Beschichtungsbad für das kataporetische Beschichten von Oberflächen von als Kathode geschalteten elektrisch leitfähigen Substraten in einem Elektrotauchlackierverfahren auf der Basis von wäßrigen Lösungen und/oder wäßrigen Dispersionen von Salzen kationischer Filmbildner mit organischen und/oder anorganischen Säuren. Weiterhin betrifft die Erfindung die Verwendung von quartären Ammoniumsalzen als Zusatz zu Beschichtungsbädern und ein Verfahren zum Beschichten eines elektrisch leitenden Substrats.

Bekanntlich lassen sich Überzüge auf einer Kathode aus einem Elektrotauchbad dadurch abscheiden, daß ein Gleichstrom zwischen einer Anode und einer Kathode, die in das Elektrotauchbad eingetaucht sind, geschaltet wird. Das Elektrotauchbad eingetaucht sind, geschaltet wird. Das Elektrotauchbad oder Beschichtungsbad enthält wäßrige Lösungen oder wäßrige Dispersionen von Salzen kationischer Filmbildner mit organischen und/oder anorganischen Säuren, die gegebenenfalls die üblichen Pigmente und Füllstoffe enthalten. Der pH-Wert des Tauchbades wird in der Regel auf einen Wert zwischen 1 und 9 eingestellt. Unter dem Einfluß des Gleichstromes scheidet sich der kationische Filmbildner auf dem als Kathode geschalteten Substrat ab.

Die kathodische Elektrotauchlackierung wird häufig für Grundierungen eingesetzt, d. h. die beschichteten Gegenstände erhalten mindestens eine zusätzliche Decklackschicht. Nachteilig können jedoch mit den bisher bekannten Beschichtungsbädern nur Beschichtungen mit relativ geringer Schichtdicke erreicht werden. So werden in der DE-OS 2 701 002 erreichbare Schichtdicken von nur 11,4-18 μm angegeben. Wenn an eine Lackierung besonders hohe Anforderungen hinsichtlich der Korrosionsbeständigkeit und der Oberflächengüte gestellt werden, wie es z. B. bei der Lackierung von Kraftwagen und anderen hochwertigen Gütern der Fall ist, ist es daher bisher üblich, zwischen der Elektrotauchgrundierung und dem Decklack als zusätzliche Schicht einen sogenannten Füller aufzubringen. Dies ist aufwendig und kostenintensiv. Daher ist es wünschenswert, das Elektrotauchlackierverfahren so zu verbessern, daß bei diesem Verfahren größere Schichtdicken erreicht werden können. Wie bereits oben ausgeführt, ist das mit den bisher bekannten kathodischen Beschichtungsbädern jedoch nicht möglich. Die Probleme ergeben sich daraus, daß bei der Erhöhung der Abscheidespannung über die Durchbruchspannung hinaus Oberflächenstörungen im Film durch Aufreißen der Schicht auftreten. Die Verlängerung der Beschichtungszeit ergibt ebenfalls eine Steigerung der Schichtdicke, doch läßt sich diese Steigerung nicht beliebig fortführen, denn es besteht normalerweise aufgrund des elektrischen Widerstandes des abgeschiedenen Films eine obere Grenze der Schichtdicke, bei der auch bei noch so langem Beschichten praktisch kein Schichtstärkenzuwachs mehr erreicht wird.

Dickere Schichten werden zwar bei dem sogenannten EPC-Verfahren (electro powder coating-Verfahren) erreicht, bei dem das Beschichtungsbad zusätzlich zu dem elektrophoretisch abscheidbaren Filmbildner einen festen, pulverförmigen Filmbildner enthält. In diesem Fall ist jedoch der Umgriff so schlecht, daß eine weitere elektrophoretische Beschichtung angeschlossen werden muß.

Der Erfindung liegt die Aufgabe zugrunde, Beschichtungsbäder anzugeben, bei deren Verwendung unter Beibehaltung oder Verbesserung des Umgriffs größere Schichtdicken des abgeschiedenen Filmes erzielt werden können.

Diese Aufgabe wird bei einem Beschichtungsbad der Eingangs genannten Art erfindungsgemäß gelöst durch einen zusätzlichen Gehalt an quartären Ammoniumsalzen der folgenden allgemeinen Formel

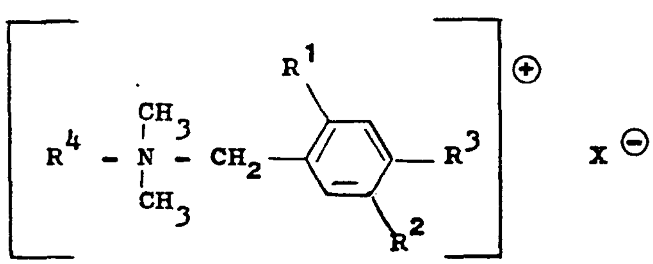

in welcher

$R^1$ = H oder $CH_3$,

$R^2$ = H oder $C_nH_{2n+1}$

$R^3$ = H oder 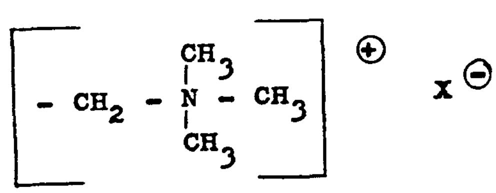

$R^4 = CH_3$ oder $C_1H_{2n+1}$ sind,
$X^\ominus$ das Anion einer anorganischen oder organischen Säure darstellt und
n eine ganze Zahl von 10 bis 18 bedeutet.

Vorteilhaft betragt der Gehalt an dem quartären Ammoniumsalz, bezogen auf den festen kationischen Filmbildner 0,5-8 Gew.-%.

Als besonders geeignet zur Steigerung der Schichtdicke haben sich Methyldodecylbenzyltrimethylammoniumchlorid, Methyldodecylxylylen- Bis-(trimethylammoniumchlorid) und n-Alkyl-Dimethylbenzylammoniumchlorid mit einem Alkylrest mit 12 bis 16 Kohlenstoffatomen bzw. die entsprechenden Acetate erwiesen.

Die genannten Ammoniumsalze sind an sich bekannt. Sie werden bisher als Keimtötungsmittel, z. B. in der Veterinär-Medizin, in sanitären Aerosolen, Pasten oder Salben, antiseptischen Tinkturen oder in Tabletten und Pulvern zur Desinfektion im Haushalt, in landwirtschaftlichen Betrieben, Restaurants, Krankenhäusern und dergleichen eingesetzt. Es war daher überraschend, daß durch die Verwendung dieser Ammoniumsalze in Elektrotauchbädern eine Erhöhung der Schichtdicke zu erreichen ist.

Die Erfindung betrifft auch ein Verfahren zum Beschichten eines elektrisch leitenden Substrates, bei dem das Substrat in ein wäßriges Bad auf Basis eines mindestens teilweise mit Säuren neutralisierten, kationischen Harzes, das gegebenenfalls zusätzlich wassermischbare, organische Lösungsmittel enthält, eingetaucht und als Kathode geschaltet wird, mittels Gleichstrom ein Film auf dem Substrat abgeschieden wird, das Substrat aus dem Bad entfernt wird und der Film durch Einbrennen gehärtet wird. Das erfindungsgemäße Verfahren ist dadurch gekennzeichnet, daß das Bad zusätzlich ein quartäres Ammoniumsalz der o. g. Art enthält.

Die Abscheidung von kationischen Filmbildnern mittels Kataphorese ist bekannt. Hierbei sind die elektrisch leitenden Werkstücke als Kathode geschaltet, auf der die kationischen Filmbildner als Überzug abgeschieden werden. Im Gegensatz zur anaphoretischen Abscheidung gehen hierbei keine Metall-Ionen von der zu beschichtenden Metalloberfläche in Lösung. Die abzuscheidenden Filmbildner für die Kataphorese sind normalerweise basische oder amphotere Homo- und/oder Copolymerisate, Polykondensate und/oder Polyadditionsprodukte und/oder Kombinationen der drei vorgenannten Klassen.

Für die Herstellung und Verwendung dieser kationischen Filmbildner wird kein Schutz begehrt. Beispielsweise werden solche Produkte beschreiben in der DE-AS 1 276 260 oder der französischen Patentschrift 1 313 355, in den DE-OS 2 252 536, 2 320 301, 2 357 075. In der Regel sind alle durch Kataphorese abscheidbaren Kunstharze geeignet.

Elektrophoretische Beschichtungsbäder enthalten üblicherweise Pigmente, Netzmittel, Antischaummittel, organische Lösungsmittel und andere bekannte Hilfsmittel. In der DE-OS 3 002 305 ist auch die Möglichkeit angesprochen, dem Bad Bakterizide zuzusetzen. Es werden allerdings keinerlei Angaben über die Art und die Menge der Bakterizide gemacht. Insbesondere enthält die Offenlegungsschrift keinen Hinweis darauf, die Ammoniumsalze der o. g. Art zur Steigerung der Schichtdicke bei der kathodischen Elektrophorese einzusetzen. Diese Verwendungsmöglichkeit war überraschend und für den Fachmann nicht naheliegend.

Die erfindungsgemäß einzusetzenden Ammoniumsalze können in einfacher Weise in das fertige Beschichtungsbad eingerührt werden. Die elektrophoretische Abscheidung erfolgt dann unter den bekannten Bedingungen. Dabei wurde durch Messungen an den abgeschiedenen, noch nicht eingebrannten Filmen festgestellt, daß der elektrische Widerstand derselben durch die Ammoniumsalze erheblich herabgesetzt wird.

Hierauf ist offensichtlich die Möglichkeit, dickere Filme abzuscheiden, zurückzuführen. Die eingebrannten Filme zeigen in ihrem Aussehen und ihren technischen Eigenschaften, wie z. B. Korrosionsschutz, Haftung, Härte und dergleichen keine Unterschiede zu den bisher bekannten Filmen.

Im folgenden wird die Erfindung anhand von Beispielen näher erläutert. Darin genannte Teile sind Gewichtsteile, Prozente sind Gewichtsprozente.

## Herstellung eines kationischen Filmbildners A

Es wird ein kationisches Harz nach der DE-OS 2 320 301 hergestellt, das ein Mannich-Kondensationsprodukt auf der Basis eines Umsetzungsproduktes eines modifizierten Bisphenol-A-Harzes aus Formaldehyd und sekundären Aminen mit Epoxidharzen darstellt.

Zu 1 100 Teilen (4,8 Mole) Bisphenol A, 917,5 Teilen (8,7 Mole) Diäthanolamin, 332,5 Teilen (2,5 Mole) Di-2-methoxyäthylamin und 375 Teilen Isopropanol werden bei 20 bis 50 °C 984 Teile (13,1 Mole) Formalin 40 %ig zugetropft. Man läßt eine Stunde bei 30 °C rühren und erhitzt dann 3 Stunden auf 80 °C. Unter schwachem Vakuum werden Isopropanol und Wasser abdestilliert. Man erhält ein Mannich-Kondensationsprodukt in Form einer gelben harzähnlichen Masse mit einem Festgehalt von 91 %.

2 542 Teile dieses Mannich-Kondensationsproduktes werden mit 70 Teilen Paraformaldehyd versetzt und 9 bis 10 Stunden bei 70 °C kondensiert. Es wird eine viskose Masse mit einem Festgehalt von 90 % erhalten.

Hiervon werden 544 Teile der Mannichbase mit 136,5 Teilen eines handelsüblichen Reaktionsproduktes aus Bisphenol A und Epichlorhydrin (Epoxidwert : 0,2) (Epoxidharz Epoxy 1/33 der Firma Chemapol) und 54,5 Teilen eines handelsüblichen Reaktionsproduktes aus Pentaerythrit und Epichlorhydrin (Epoxidwert : 0,57) (Epoxin 162, BASF AG) unter Verwendung von 34 Teilen Dimethylglykoläther 3 Stunden bei 60 °C zur Reaktion gebracht.

Man erhält ein klares viskoses Harz mit einem mittleren Molekulargewicht von 860 und einem Restformaldehydgehalt von 0,3 %. Der Festkörper beträgt 70 %.

Herstellung eines kationischen Filmbildners B

Es wurde ein kataphoretisch abscheidbarer Filmbildner nach den Angaben der DE-OS 2 252 536 folgendermaßen hergestellt :

100 Teile eines Polyglycidyläthers von Bisphenol A (Epoxid-Äquivalentgewicht 910, Schmelzpunkt : 96° bis 104 °C, Hydroxylwert : 0,34)

werden in

367,2 Teilen N-Methylpyrrolidon und
244,8 Teilen 4-Methoxy-4-methylpentanon

gelöst und

517,0 Teilen eines teilweise verkappten Diisocyanates, hergestellt durch Umsetzen von
348,0 Teilen 2-4-Toluoldiisocyanat mit
260,5 Teilen 2-Äthylhexanol,

zugefügt. Diese Mischung wird nach Zugabe von 5 Tropfen Dibutylzinndilaurat als Katalysator auf 100 °C so lange erhitzt, bis keine freien Isocyanatgruppen mehr nachweisbar sind.

Anschließend wird auf 60 °C abgekühlt und dem Ansatz werden 79,2 Teile Diäthylamin zugefügt.

Man erhitzt wiederum auf 100 °C und hält diese Temperatur während 2 Stunden. Nach dem Abkühlen erhält man ein selbstvernetzendes kataphoretisch abscheidbares Polyurethanharz mit einem Festkörpergehalt von 73,5 %.

Herstellung eines kationischen Filmbildners C

Es wird ein kataphoretisch abscheidbarer Filmbildner gemäß Beispiel 1 der DAS 1 276 260 hergestellt :

Eine durch Lösungspolymerisation auf übliche Weise hergestellt Lösung eines Mischpolymerisates aus

200 Teilen N-Vinylimidazol,
250 Teilen 2-Oxahexylamid der Acrylsäure,
300 Teilen 2-Äthylhexylester der Acrylsäure,
200 Teilen Styrol und
50 Teilen 4-Hydroxybutylester der Acrylsäure in
1 100 Teilen Butanol

wird mit Salzsäure bis zu einem pH-Wert von 5,2 neutralisiert. Der Festkörpergehalt beträgt ca. 50 %.

Beispiel

Zur Herstellung eines Beschichtungsbades werden 385 Gewichtsteile des kataphoretisch abscheidbaren Filmbildners A mit 2 Gewichtsprozent Eisessig, bezogen auf den Festkörper des Filmbildners A, neutralisiert. Anschließend werden 221 Gewichtsteile einer auf einem Dreiwalzenstuhl homogenisierten Pigmentpaste zugegeben, die sich zusammensetzt aus

366 Gewichtsteilen des vorstehend beschriebenen, mit Essigsäure versetzten Filmbildners A,
174 Gewichtsteilen Talkum,
45 Gewichtsteilen Ruß,
90 Gewichtsteilen aliphatischer Fettalkohole mit 10 bis 14 C-Atomen,
325 Gewichtsteilen Isopropanol.

Die Mischung wird mit deionisiertem Wasser auf einen Festkörpergehalt von 12 % verdünnt und vor Beginn der Abscheidung 48 Stunden bei 30 °C gerührt. Der pH-Wert des verdünnten Beschichtungsbades beträgt 7,9. Von diesem Beschichtungsbad werden jeweils Portionen zu 1 000 $cm^3$ abgeteilt, und jede Portion erhält folgende Zusätze, wobei die Prozentangaben jeweils auf den Festkörper des Filmbildners A bezogen sind :

a. 3,5 Gew.-%
Methyldodecylbenzyltrimethylammoniumchlorid

b. 3 Gew.-%
Methyldodecylxylylen-bis-trimethylammoniumacetat

c. 3 Gew.-%
N-Alkyldimethylbenzylammoniumacetat
Alkyl = 50 % $C_{14}$, 40 % $C_{12}$ und 10 % $C_{16}$

d. kein Zusatz (Vergleichsbeispiel)

Mit den Beschichtungsbädern a, b, c und d werden dann unter jeweils gleichen Abscheidebedingungen als Kathode geschaltete Eisenbleche von $10 \times 10\,cm^2$ beschichtet.

Als Anode wird eine rostfreie Edelstahlelektrode in das Beschichtungsbad eingetaucht, das während der Abscheidungsdauer auf eine Temperatur von 26 °C gehalten wird. Es werden in einem kontinuierlich arbeitenden Blechabscheider Bleche mit durchschnittlich 40 $Coulomb/cm^3$ eingebrannten Lackfilm beschichtet.

Die Bleche werden aus dem Bad genommen, mit entionisiertem Wasser gespült und eingebrannt. Die Bäder a, b und c ergeben Schichtstärken des eingebrannten Films von ca. 35-50 µm, das Bad d ergibt eine Schichtstärke von 14-20 µm.

Das gleiche Ergebnis wird erhalten, wenn anstelle des Beschichtungsbades mit dem Filmbildner A Beschichtungsbäder mit dem Filmbildner B und C verwendet werden. Dabei zeigen die aus den Bädern a, b und c abgeschiedenen Filme nach dem Einbrennen die gleichen mechanischen Eigenschaften hinsichtlich Steinschlagfestigkeit, Biegung, Tiefung und dgl. wie die Vergleichsbeispiele. Der Umgriff war in den Fällen a, b und c mindestens gleich gut, teilweise besser als im Fall d.

**Ansprüche**

1. Beschichtungsbad für das kataphoretische Beschichten von Oberflächen von als Kathode geschalteten elektrisch leitfähigen Substraten in einem Elektrotauchlackierverfahren auf der Basis von wäßrigen Lösungen und/oder wäßrigen Dispersionen von Salzen kationischer Filmbildner mit organischen und/oder anorganischen Säuren, gekennzeichnet durch einen zusätzlichen Gehalt an quartären Ammoniumsalzen der folgenden allgemeinen Formel

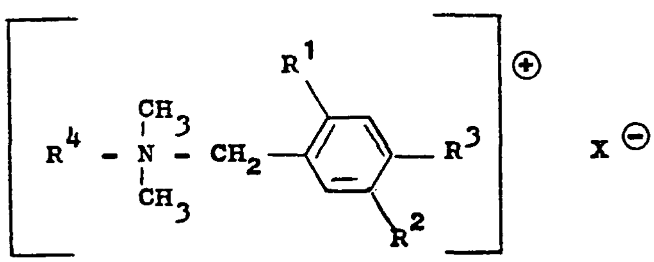

in welcher
$R^1$ = H oder $CH_3$,
$R^2$ = H oder $C_nH_{2n+1}$

$R^3$ = H oder

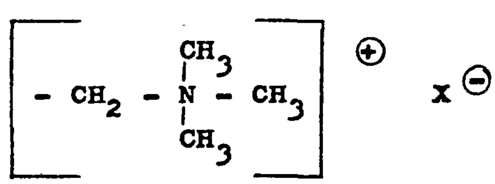

$R^4$ = $CH_3$ oder $C_nH_{2n+1}$ sind,
$X^{\ominus}$ das Anion einer anorganischen oder organischen Säure darstellt und
n eine ganze Zahl von 10 bis 18 bedeutet.

2. Beschichtungsbad nach Anspruch 1, dadurch gekennzeichnet, daß der Gehalt an dem quartären Ammoniumsalz, bezogen auf den festen, kationischen Filmbildner 0,5-8 Gew.-% beträgt.

3. Verwendung von quartären Ammoniumsalzen der folgenden allgemeinen Formel

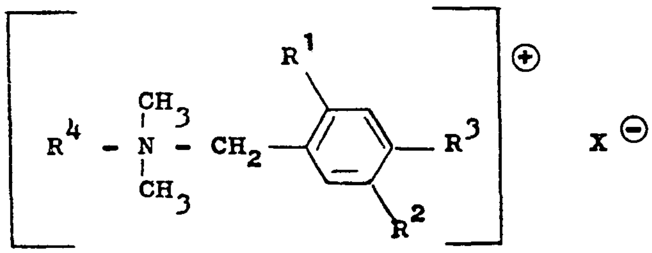

in welcher
$R^1$ = H oder $CH_3$,
$R^2$ = H oder $C_nH_{2n+1}$

$R^3$ = H oder

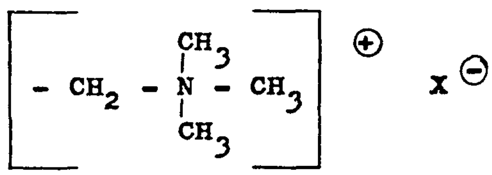

$R^4$ = $CH_3$ oder $C_nH_{2n+1}$ sind,
$X^\ominus$ das Anion einer anorganischen oder organischen Säure darstellt und
n eine ganze Zahl von 10 bis 18 bedeutet, als Zusatz zu Beschichtungsbäder für das kataphoretische Beschichten von Oberflächen von als Kathode geschalteten elektrisch leitfähigen Substraten in einem Elektrotauchlackierverfahren auf Basis von wäßrigen Lösungen und/oder wäßrigen Dispersionen von Salzen kationischer Filmbildner mit organischen und/oder anorganischen Säuren

4. Verfahren zum Beschichten eines elektrisch leitenden Substrats, bei dem das Substrat in ein wäßriges Bad auf Basis eines mindestens teilweise mit Säuren neutralisierten kationischen Harzes, das gegebenenfalls zusätzlich wassermischbare organische Lösungsmittel enthält, eingetaucht und als Kathode geschaltet wird, mittels Gleichstrom ein Film auf dem Substrat abgeschieden wird, das Substrat aus dem Bad entfernt wird und der Film durch Einbrennen gehärtet wird, dadurch gekennzeichnet, daß das Bad zusätzlich ein quartäres Ammoniumsalz der folgenden allgemeinen Formel enthält :

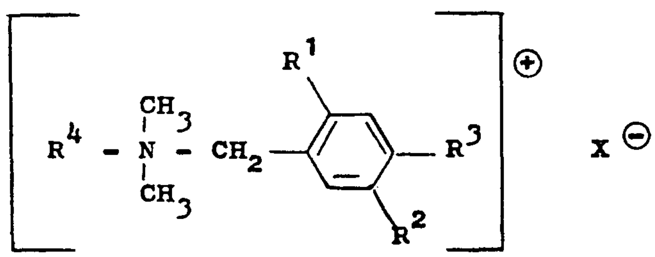

in welcher
$R^1$ = H oder $CH_3$,
$R^2$ = H oder $C_nH_{2n+1}$

$R^3$ = H oder

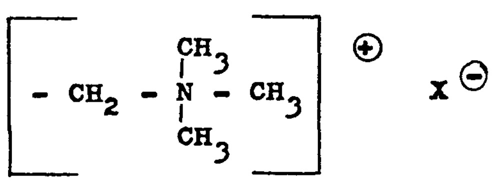

$R^4$ = $CH_3$ oder $C_nH_{2n+1}$ sind,
$X^\ominus$ das Anion einer anorganischen oder organischen Säure darstellt und
n eine ganze Zahl von 10 bis 18 bedeutet.

**Claims**

1. A coating bath for the cataphoretic coating of surfaces of electrically conductive substrates connected as the cathode, in an electrocoating process using aqueous solutions and/or aqueous dispersions of salts of cationic film-formers with organic and/or inorganic acids, which additionally contains quaternary ammonium salts of the following general formula

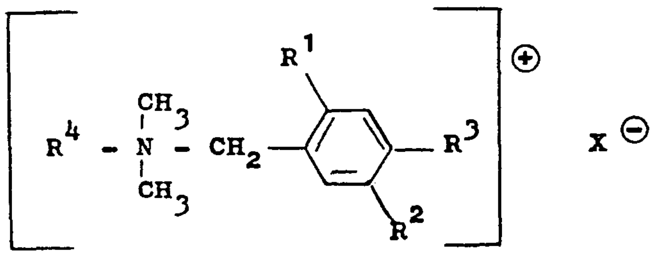

in which
$R^1$ = H or $CH_3$,
$R^2$ = H or $C_nH_{2n+1}$,

$R^3$ = H or 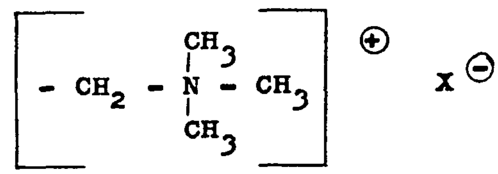

$R^4$ = $CH_3$ or $C_nH_{2n+1}$,
$X^{\ominus}$ represents the anion of an inorganic or organic acid and
n denotes an integer from 10 to 18.

2. A coating bath as claimed in claim 1, wherein the quaternary ammonium salt content, relative to the amount of solid, cationic film-former, is 0.5-8 % by weight.

3. The use of quaternary ammonium salts of the following general formula

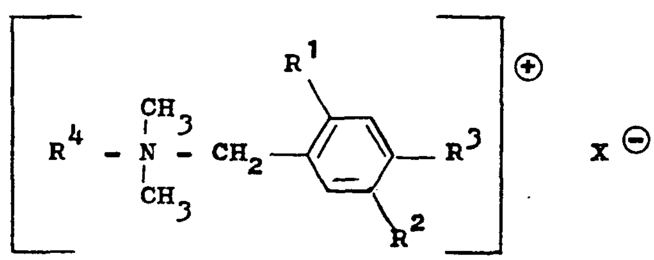

in which
$R^1$ = H or $CH_3$,
$R^2$ = H or $C_nH_{2n+1}$,

$R^3$ = H or 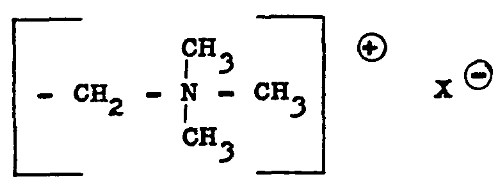

$R^4$ = $CH_3$ or $C_nH_{2n+1}$,
$X^{\ominus}$ represents the anion of an inorganic or organic acid and
n denotes an integer from 10 to 18, as an additive to coating baths for the cataphoretic coating of surfaces of electrically conductive substrates connected as the cathode, in an electrocoating process using aqueous solutions and/or aqueous dispersions of salts of cationic film-formers with organic and/or inorganic acids.

4. A process for coating an electrically conductive substrate, in which process the substrate is immersed in an aqueous bath based on a cationic resin which is at least partially neutralized with acids and may additionally contain water-miscible organic solvents, and is connected as the cathode, a film is deposited on the substrate by means of direct current, the substrate is removed from the bath, and the film is hardened by baking, wherein the bath additionally contains a quaternary ammonium salt of the following general formula :

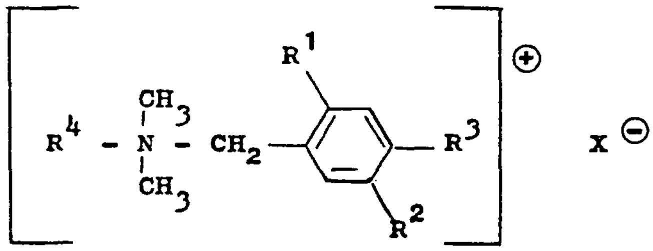

in which
$R^1$ = H or $CH_3$,
$R^2$ = H or $C_nH_{2n+1}$,

$R^3$ = H or 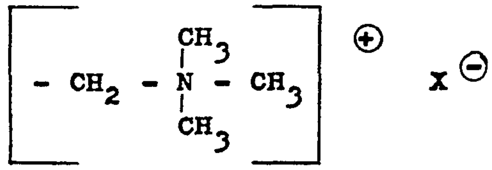

$R^4$ = $CH_3$ or $C_nH_{2n+1}$,
$X^{\ominus}$ represents the anion of an inorganic or organic acid and
n denotes an integer from 10 to 18.

**Revendications**

1. Bain de revêtement pour le revêtement cataphorétique de substrats conducteurs de l'électricité branché comme cathode, dans un procédé de peinture par électrophorèse, à base de solutions aqueuses et/ou de dispersions aqueuses de sels de filmogènes cationiques et d'acides organiques et/ou minéraux, caractérisé par une teneur supplémentaire en sels d'ammonium quaternaire de la formule générale suivante :

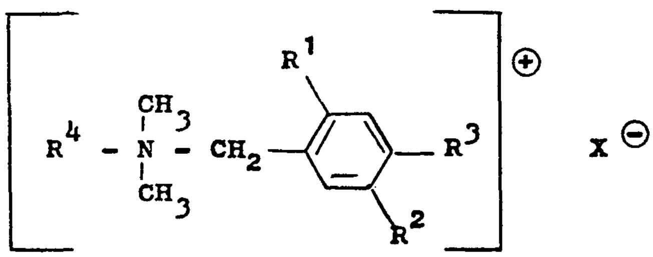

dans laquelle
$R^1$ = H ou $CH_3$,
$R^2$ = H ou $C_nH_{2n+1}$

$R^3$ = H ou 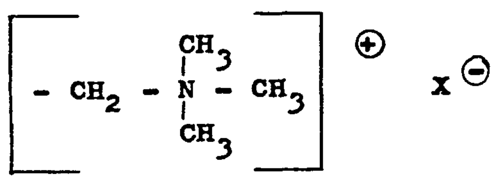

$R^4$ = $CH_3$ ou $C_nH_{2n+1}$
$X^{\ominus}$ représente l'anion d'un acide minéral ou organique et
n représente un nombre entier de 10 à 18.

2. Bain de revêtement selon la revendication 1, caractérisé par le fait que la teneur en sel d'ammonium quaternaire, relativement au filmogène cationique solide, est de 0,5 à 8 % en poids.

3. Utilisation de sels d'ammonium quaternaire de la formule générale suivante :

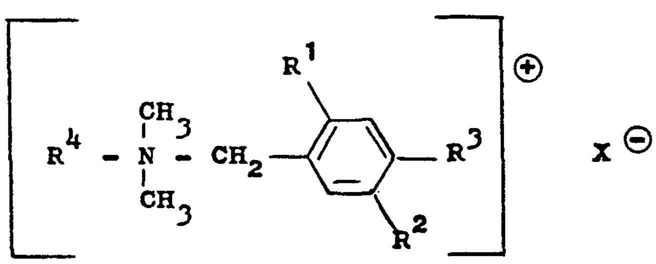

dans laquelle
$R^1$ = H ou $CH_3$,
$R^2$ = H ou $C_nH_{2n+1}$

$R^3$ = H ou 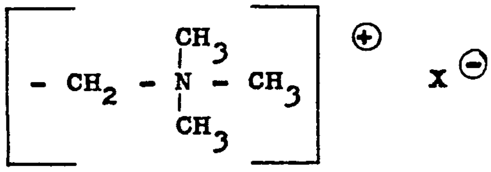

$R^4$ = $CH_3$ ou $C_nH_{2n+1}$,
$X^\ominus$ représente l'anion d'un acide minéral ou organique et
n représente un nombre entier de 10 à 18 comme additif à des bains de revêtement pour le revêtement cataphorétique de surfaces de substrats conducteurs de l'électricité branchés comme cathode, dans un procédé de peinture par électrophorèse, à base de solutions aqueuses et/ou de dispersions aqueuses de sels de filmogènes cationiques et d'acides organiques et/ou minéraux.

4. Procédé de revêtement d'un substrat conducteur de l'électricité, dans lequel on plonge le substrat dans un bain aqueux à base d'une résine cationique au moins partiellement neutralisée par des acides et qui contient éventuellement en outre des solvants organiques miscibles à l'eau et on le branche comme cathode, on dépose un feuil sur le substrat au moyen de courant continu, on retire le substrat du bain et on durcit le feuil par cuisson, caractérisé par le fait que le bain contient en outre un sel d'ammonium quaternaire de la formule générale suivante :

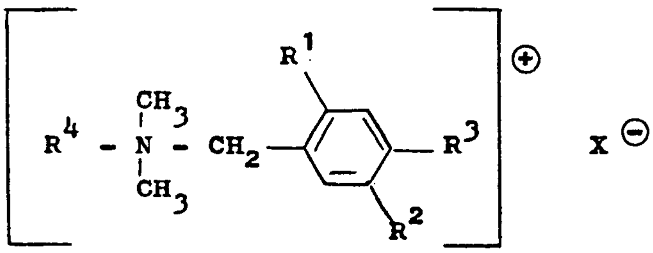

dans laquelle
$R^1$ = H ou $CH_3$,
$R^2$ = H ou $C_nH_{2n+1}$

$R^3$ = H ou 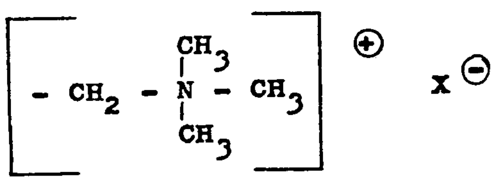

$R^4$ = $CH_3$ ou $C_nH_{2n+1}$,
$X^\ominus$ représente l'anion d'un acide minéral ou organique et
n représente un nombre entier de 10 à 18.